# EUROPEAN PATENT SPECIFICATION

(11) **EP 2 197 272 B1**
(45) Date of publication and mention of the grant of the patent: **28.09.2011**
(21) Application number: 08785601.9
(22) Date of filing: 18.08.2008
(51) Int. Cl.: A01N 33/18, A01N 41/10, A01P 13/02

(54) **HERBICIDAL COMPOSITION AND METHOD OF USE THEREOF**
HERBIZIDE ZUSAMMENSETZUNG UND VERFAHREN ZU IHRER VERWENDUNG
COMPOSITION HERBICIDE ET PROCÉDÉ D'UTILISATION

(30) Priority: 27.08.2007 US 968123 P
(43) Date of publication of application: 23.06.2010
(73) Proprietor: Syngenta Participations AG, 4058 Basel (CH)
(72) Inventor: DUNNE, Cheryl Lynn, Vero Beach, Florida 32967 (US); JAMES, John R., Greensboro, North Carolina 27409 (US)
(74) Representative: Lee, Michael David
(86) International application number: PCT/EP2008/006771
(87) International publication number: WO 2009/027028

(56) References cited:
- WO-A-02/21917
- WO-A-2007/011847
- US-A- 5 912 207

## Description

The present invention relates to a herbicidal composition comprising mesotrione and pendimethalin. The invention also relates to a method of controlling the growth of weeds and to the use of this composition.

The protection of crops from weeds and other vegetation that inhibit crop growth is a constantly recurring problem in agriculture and turf management. In addition, aesthetically, it may be of interest to remove such unwanted weeds and vegetation, for example, when growing turf in areas such as golf courses, lawns and public parks. To help combat these problems, researchers in the field of synthetic chemistry have produced an extensive variety of chemicals and chemical formulations effective in the control of such unwanted growth. Chemical herbicides of many types have been disclosed in the literature and a large number are in commercial use. Commercial herbicides and some that are still in development are described in 'The Pesticide Manual', 14th Edition, published 2006 by the British Crop Protection Council.

In some cases, herbicidal active ingredients have been shown to be more effective in combination than when applied individually, and this is referred to as "synergism", since the combination demonstrates a potency or activity level exceeding that which it would be expected to have based on knowledge of the individual potencies of the components. The present invention resides in the discovery that mesotrione, or a salt or metal chelate thereof, and pendimethalin, already known individually for their herbicidal properties, display a synergistic effect when applied in combination.

The herbicidal compounds forming the composition of this invention are independently known in the art for their effects on plant growth. They are disclosed in 'The Pesticide Manual', *ibid,* and are also commercially available.

Mesotrione (2-(2'-nitro-4'-methylsulphonylbenzoyl)-1,3-cyclohexanedione) is a member of an important class of selective herbicides, the triketones and works by affecting carotenoid biosynthesis. In particular, it inhibits the enzyme 4-hydroxyphenyl-pyruvate dioxygenase (it is an HPPD-inhibitor). In the acid form, its structure can be represented as:

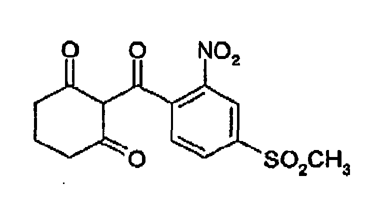

In addition to the acid form, mesotrione also forms salts and metal chelate, for example, a copper chelate. These metal chelates are disclosed, *inter alia,* in US Patent No. 5,912,207 where they are shown to have unexpectedly superior stability in certain environments when compared to unchelated mesotrione.

Mesotrione is best known for its ability to control a wide spectrum of broadleaf weeds at a wide range of growth stages when applied post-emergence on corn and turfgrass. It is typically used at a low rate (100-225 grams of active ingredient per hectare depending on herbicide formulation on application timing) to control weeds which are present at application and which emerge for up to four weeks afterwards. Once applied, mesotrione is rapidly absorbed by the leaves, shoots, roots and seeds. In susceptible weeds, it disrupts carotenoid biosynthesis, an essential process for plant growth and this leads to plant depth. Unlike weeds, corn plants and certain turfgrass species are able to tolerate mesotrione by rapidly breaking down the active compound into inactive compounds.

Pendimethalin belongs to the dinitroaniline class of herbicides. Pendimethalin is a selective herbicide which acts as a cell division inhibitor by inhibiting microtubule assembly. The chemical name for pendimethalin is *N*-(1-ethylpropyl)-3,4-dimethyl-2,6-dinitrobenzenamine, and its structure can be represented as:

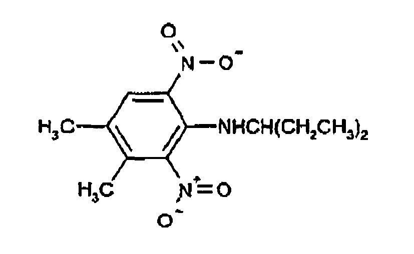

International Patent Application publication number WO02/21917 relates to herbicidal compositions comprising mesotrione and a 2,6-dinitroaniline herbicide. It does not expressly disclose pendimethalin.

Accordingly, the present invention provides a herbicidal composition comprising a herbicidally effective amount of a mixture of mesotrione and pendimethalin.

The composition contains a herbicidally effective amount of a combination of mesotrione and pendimethalin. The term 'herbicide' as used herein denotes a compound which controls or modifies the growth of plants. The term 'herbicidally effective amount indicates the quantity of such a compound or combination of such compounds which is capable of producing a controlling or modifying effect on the growth of plants. Controlling or modifying effects include all deviation from natural development, for example: killing, retardation, leaf burn, albinism, dwarfing and the like. For example, plants that are not killed are often stunted and non-competitive with flowering disrupted. The term 'plants' refers to all physical parts of a plant, including seeds, seedlings, saplings, roots, tubers, stems, stalks, foliage and fruits.

It is noted that mesotrione is only one of a number of herbicides that act as HPPD inhibitors. Other HPPD inhibitors are also known and may be selected from the group consisting of triketones, isoxazoles, pyrazoles, benzobicyclon and ketospiradox. Further details of the individual compounds which fall within the triketones, isoxazoles and pyrazoles may be found in PCT Publication No. WO 2005/053407 but there may be mentioned sulcotrione, isoxaflutole, isoxachlortole, benxofenap, pyrazolynate and pyrazoxyfen. Further HPPD inhibitors include tembotrione, topramezone, and a compound of formula I 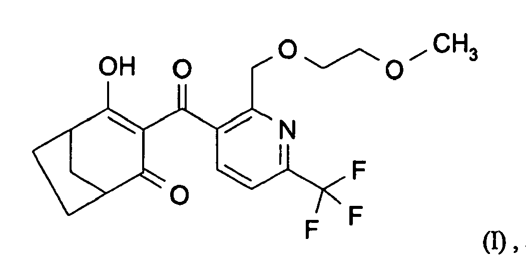 and all tautomeric forms thereof.

As used herein, the designation 'mesotrione' includes the salts and chelated forms of mesotrione as well as the acid form and also includes any enolic tautomeric forms that may give rise to geometric isomers. Furthermore, in certain cases, the various substituents and/or chelated forms may contribute to optical isomerism and/or stereoisomerism. All such tautomeric forms, racemic mixtures and isomers are included within the scope of the present invention.

In one embodiment of the invention, the mesotrione is present as the acid form. In a further embodiment, mesotrione is present as a salt or a metal chelate.

Suitable salts of mesotrione include salts of cations or anions which are known and accepted in the art for the formation of salts for agricultural or horticultural use. Such salts may be formed, for example, using amines, alkali metal bases, alkaline earth metal bases and quaternary ammonium bases.

Metal chelates of 2-(substituted benzoyl)-1,3-cyclohexanedione compounds including mesotrione are described, *inter alia*, in US Patent No. 5,912,207. In one embodiment, suitable metal chelates of mesotrione have the general structure: 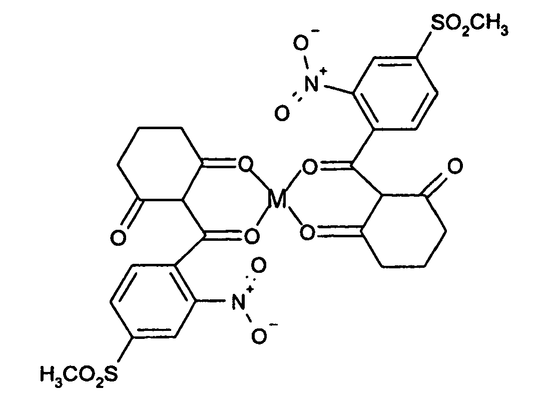 wherein M represents a di- or trivalent metal ion.

Suitably, the di- or trivalent metal ion may be a Cu²⁺, Co²⁺, Zn²⁺, Ni²⁺, Ca²⁺, Al³⁺, Ti³⁺ or Fe³⁺ ion. More suitably, the metal ion may be a divalent transition metal ion such as Cu²⁺, Ni²⁺, Zn²⁺ and Co²⁺. More suitably the metal ion may be Cu²⁺ and Zn²⁺ and most suitably Cu²⁺.

Herbicidal metal chelates of mesotrione for use in this invention may be prepared by the methods described in the aforementioned US Patent, or by the application and adaptation of known methods used or described in the chemical literature. In particular, any appropriate salt which would be a source of a di- or trivalent metal ion may be used to form the metal chelate of the dione compound in accordance with this invention. Particularly suitable salts include chlorides, sulphates, nitrates, carbonates, phosphates and acetates.

Suitably, the composition of the invention comprises mesotrione and pendimethalin in a synergistically effective amount. In the compositions of this invention, the mixture ratio of mesotrione to pendimethalin at which the herbicidal effect is synergistic lies within the range of from about 1:100 to about 100:1 by weight. Suitably, the mixture ratio of mesotrione to pendimethalin is from about 1:50 to about 10:1 by weight. A mixture ratio of mesotrione to pendimethalin from about 1:10 to about 2:1 by weight is particularly suitable.

The rate at which the composition of the invention is applied will depend upon the particular type of weed to be controlled, the degree of control required and the timing and method of application. In general, the compositions of the invention can be applied at an application rate of between 0.005 kilograms/hectare (kg/ha) and about 5.0kg/ha, based on the total amount of active ingredient (mesotrione and pendimethalin) in the composition. An application rate of between about 0.1 kg/ha and about 3.0 kg/ha is preferred, with an application rate of between about 0.2 kg/ha and 1 kg/ha being especially preferred. It is noted that the rates used in the examples below are glasshouse rates and are lower than those normally applied in the field as herbicide effects tend to be magnified in such conditions.

In a further aspect, the present invention provides a method of controlling or modifying the growth of weeds comprising applying to the locus of such weeds a herbicidally effective amount of a composition of the invention.

The composition of the invention may be used to control a large number of agronomically important weeds, including monocotyledonous weeds and dicotyledonous weeds.

For example, the invention may be used to control dicotyledonous weeds such as *Abutilon* spp., *Ambrosia* spp., *Amaranthus* spp., *Chenopodium* spp., *Erysimum* spp., *Euphorbia* spp., *Fallopia* spp., *Galium* spp., *Hydrocotyle* spp., *Ipomoea* spp., *Lamium* spp., *Medicago* spp., *Oxalis* spp., *Plantago* spp., *Polygonum* spp., *Richardia* spp., *Sida* spp., *Sinapis* spp., *Solanum* spp., *Stellaria* spp., *Taraxacum* spp., *Trifolium* spp., *Veronica* spp., *Viola* spp. and *Xanthium* spp..

The invention may also be used to control monocotyledonous weeds such as *Agrostis* spp., *Alopecurus* spp., *Apera* spp., *Avena* spp., *Brachiaria* spp., *Bromus* spp., *Digitaria* spp., *Echinochloa* spp., *Eleusine* spp., *Eriochloa* spp., *Leptochloa* spp., *Lolium* spp., *Ottochloa* spp., *Panicum* spp., *Paspalum* spp., *Phalaris* spp., *Poa* spp., *Rottboellia* spp., *Setaria* spp., *Sorghum* spp., both intrinsically sensitive as well as resistant (e.g. ACCase and/or ALS resistant) biotypes of any of these grass weeds, as well as broadleaf monocotyledonous weeds such as *Commelina* spp., *Monochoria* spp., *Sagittaria* spp. and sedges such as *Cyperus* spp. and *Scirpus* spp..

More specifically, among the weeds which may be controlled by the composition of the invention, there may be mentioned monocotyledonous weeds such as grasses (e.g. barnyard grass (*Echinochloa crus-galli*), large and smooth crabgrass (*Digitaria sanguinalis*, *Digitaria ischaemum*), goosegrass (*Eleusine indica*), bent grass (*Agrostis* spp.) and nimbleweed) and dicotyledonous weeds such as dandelion (*Taraxacum* spp.), white and red clover (*Trifolium* spp.), chickweed (*Stellaria media*), henbit (*Lamium amplexicaule*), corn speedwell (*Veronica arvensis*), oxalis (*Oxalis* spp.), buckhorn and broadleaf plantain (*Plantago lanceolata, Plantago major*), dollar weed (*Hydrocotyle umbellata*), FL pusley (*Richardia scabra*), lambsquarters (*Chenopodium* spp.), knotweed (*Fallopia* spp.), ragweed (*Ambrosia artemisiifolia*), wild violets (*Viola* spp.), pigweed (*Amaranthus* spp.), black medic (*Medicago lupulina*), and hedge weed (*Erysimum officinale*).

In a particular embodiment, the compositions of the invention may be used to control monocot weeds such as goosegrass or dicot weeds such as white clover.

For the purposes of the present invention, the term 'weeds' includes undesirable crop species such as volunteer crops. For example, in the context of turf grass crops such as on a golf course, creeping bentgrass putting green turf can be considered a 'volunteer' if found in a fairway section where a different variety of grass is being cultivated. The other grasses listed below can, similarly, be considered weeds when found in the wrong place.

The 'locus' is intended to include soil, seeds, and seedlings as well as established vegetation.

The benefits of the present invention are seen most when the pesticidal composition is applied to kill weeds in growing crops of useful plants: such as maize (corn) including field corn, pop corn and sweet corn; cotton, wheat, rice, oats, potato sugarbeet, plantation crops (such as bananas, fruit trees, rubber trees, tree nurseries), vines, asparagus, bushberries (such as blueberries), caneberries, cranberries, flax, grain sorghum, okra, peppermint, rhubarb, spearmint and sugarcane.

'Crops' are understood to also include various turf grasses including, but not limited to, the cool-season turf grasses and the warm-season turf grasses. In one embodiment of the present invention, the crop is turfgrass.

Cool season turfgrasses include, for example, bluegrasses (*Poa L.*), such as Kentucky bluegrass (*Poa pratensis* L.), rough bluegrass (*Poa trivialis* L.), Canada bluegrass (*Poa compressa* L.) and annual bluegrass (*Poa annua* L.); bentgrasses (*Agrostis* L.), such as creeping bentgrass (*Agrostis palustris* Huds.), colonial bentgrass (*Agrostis tenius* Sibth.), velvet bentgrass (*Agrostis canina* L.) and redtop (*Agrostis alba* L.); fescues (*Festuca* L.), such as tall fescue (*Festuca arundinacea* Schreb.), meadow fescue (*Festuca elatior* L.) and fine fescues such as creeping red fescue (*Festuca rubra* L.), chewings fescue (*Festuca rubra* var. commutata Gaud.), sheep fescue (*Festuca ovina* L.) and hard fescue (*Festuca longifolia*); and ryegrasses (*Lolium* L.), such as perennial ryegrass (*Lolium perenne* L.) and annual (Italian) ryegrass (*Lolium multiflorum* Lam.).

Warm season turfgrasses include, for example, Bermudagrasses (*Cynodon* L. C. Rich), including hybrid and common Bermudagrass; Zoysiagrasses (*Zoysia Willd.*), St. Augustinegrass (*Stenotaphrum secundatum* (Walt.) Kuntze); and centipedegrass (*Eremochloa ophiuroides* (Munro.) Hack.).

In addition 'crops' are to be understood to include those crops that have been made tolerant to pests and pesticides, including herbicides or classes of herbicides (and, suitably, the herbicides of the present invention), as a result of conventional methods of breeding or genetic engineering. Tolerance to herbicides means a reduced susceptibility to damage caused by a particular herbicide compared to conventional crop breeds. Crops can be modified or bred so as to be tolerant, for example, to HPPD inhibitors such as mesotrione, EPSPS inhibitors such as glyphosate or to glufosinate. It is noted that corn is naturally tolerant to mesotrione.

The composition of the present invention is useful in controlling the growth of undesirable vegetation by pre-emergence or post-emergence application to the locus where control is desired, depending on the crop over which the combination is applied. In one embodiment, therefore, the herbicidal composition of the invention is applied as a pre-emergent application. In a further embodiment, the herbicidal composition of the invention is applied as a post-emergent application.

The compounds of the invention may be applied either simultaneously or sequentially. If administered sequentially, the components may be administered in any order in a suitable timescale, for example, with no longer than 24 hours between the time of administering the first component and the time of administering the last component. Suitably, all the components are administered within a timescale of a few hours, such as one hour. If the components are administered simultaneously, they may be administered separately or as a tank mix or as a pre-formulated mixture of all the components or as a pre-formulated mixture of some of the components tank mixed with the remaining components. In one embodiment the mixture or composition of the present invention may be applied to a crop as a seed treatment prior to planting.

In practice, the compositions of the invention are applied as a formulation containing the various adjuvants and carriers known to or used in the industry. The compositions of the invention may thus be formulated as granules (and, suitably, as stabilised granules, as described below), as wettable powders, as emulsifiable concentrates, as powders or dusts, as flowables, as solutions, as suspensions or emulsions, or as controlled release forms such as microcapsules. These formulations may contain as little as about 0.5% to as much as about 95% or more by weight of active ingredient. The optimum amount for any given compound will depend on formulation, application equipment and nature of the plants to be controlled.

Wettable powders are in the form of finely divided particles which disperse readily in water or other liquid carriers. The particles contain the active ingredient retained in a solid matrix. Typical solid matrices include fuller's earth, kaolin clays, silicas and other readily wet organic or inorganic solids. Wettable powders normally contain about 5% to about 95% of the active ingredient plus a small amount of wetting, dispersing or emulsifying agent.

Emulsifiable concentrates are homogeneous liquid compositions dispersible in water or other liquid and may consist entirely of the active compound with a liquid or solid emulsifying agent, or may also contain a liquid carrier, such as xylene, heavy aromatic naphthas, isophorone and other non-volatile organic solvents. In use, these concentrates are dispersed in water or other liquid and normally applied as a spray to the area to be treated. The amount of active ingredient may range from about 0.5% to about 95% of the concentrate.

Granular formulations include both extrudates and relatively coarse particles and are usually applied without dilution to the area in which suppression of vegetation is desired. Typical carriers for granular formulations include fertiliser, sand, fuller's earth, attapulgite clay, bentonite clays, montmorillonite clay, vermiculite, perlite, calcium carbonate, brick, pumice, pyrophyllite, kaolin, dolomite, plaster, wood flour, ground corn cobs, ground peanut hulls, sugars, sodium chloride, sodium sulphate, sodium silicate, sodium borate, magnesia, mica, iron oxide, zinc oxide, titanium oxide, antimony oxide, cryolite, gypsum, diatomaceous earth, calcium sulphate and other organic or inorganic materials which absorb or which can be coated with the active compound. Particularly suitable is a fertiliser granule carrier. Granular formulations normally contain about 5% to about 25% active ingredients which may include surface-active agents such as heavy aromatic naphthas, kerosene and other petroleum fractions, or vegetable oils; and/or stickers such as dextrins, glue or synthetic resins. Suitably, the granular formulation may be a stabilised composition which comprises at least one granular substrate material containing at least one metal chelate of mesotrione and pendimethalin. The granular substrate material can be one of the typical carriers mentioned above and/or can be a fertiliser material e.g. urea/formaldehyde fertilisers, urea, potassium chloride, ammonium compounds, phosphorus compounds, sulphur, similar plant nutrients and micronutrients and mixtures or combinations thereof. The metal chelate of mesotrione and the pendimethalin may be homogeneously distributed throughout the granule or may be spray impregnated or absorbed onto the granule substrate after the granules are formed.

Dusts are free-flowing admixtures of the active ingredient with finely divided solids such as talc, clays, flours and other organic and inorganic solids which act as dispersants and carriers.

Microcapsules are typically droplets or granules of the active material enclosed in an inert porous shell which allows escape of the enclosed material to the surroundings at controlled rates. Encapsulated droplets are typically about 1 to 50 microns in diameter. The enclosed liquid typically constitutes about 50 to 95% of the weight of the capsule and may include solvent in addition to the active compound. Encapsulated granules are generally porous granules with porous membranes sealing the granule pore openings, retaining the active species in liquid form inside the granule pores. Granules typically range from 1 millimetre to 1 centimetre, preferably 1 to 2 millimetres in diameter. Granules are formed by extrusion, agglomeration or prilling, or are naturally occurring. Examples of such materials are vermiculite, sintered clay, kaolin, attapulgite clay, sawdust and granular carbon. Shell membrane materials include natural and synthetic rubbers, cellulosic materials, styrenebutadiene copolymers, polyacrylonitriles, polyacrylates, polyesters, polyamides, polyureas, polyurethanes and starch xanthates.

Other useful formulations for herbicidal applications include simple solutions of the active ingredients in a solvent in which it is completely soluble at the desired concentration, such as acetone, alkylated naphthalenes, xylene and other organic solvents. Pressurised sprayers, wherein the active ingredient is dispersed in finely-divided form as a result of vaporisation of a low boiling dispersant solvent carrier, may also be used.

Many of the formulations described above include wetting, dispersing or emulsifying agents. Examples are alkyl and alkylaryl sulphonates and sulphates and their salts, polyhydric alcohols; polyethoxylated alcohols, esters and fatty amines. These agents, when used, normally comprise from 0.1% to 15% by weight of the formulation.

Suitable agricultural adjuvants and carriers that are useful in formulating the compositions of the invention in the formulation types described above are well known to those skilled in the art. Suitable examples of the different classes are found in the nonlimiting list below.

Liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropylene glycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, hexadecane, hexylene glycol, isoamyl acetate, isobomyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octadecanoic acid, octyl amine acetate, oleic acid, oleylamine, o-xylene, phenol, polyethylene glycol (PEG400), propionic acid, propylene glycol, propylene glycol monomethyl ether, p-xylene, toluene, triethyl phosphate, triethylene glycol, xylene sulfonic acid, paraffin, mineral oil, trichloroethylene, perchloroethylene, ethyl acetate, amyl acetate, butyl acetate, methanol, ethanol, isopropanol, and higher molecular weight alcohols such as amyl alcohol, tetrahydrofurfuryl alcohol, hexanol, octanol, etc. ethylene glycol, propylene glycol, glycerine, N-methyl-2-pyrrolidinone, and the like. Water is generally the carrier of choice for the dilution of concentrates.

Suitable solid carriers include talc, titanium dioxide, pyrophyllite clay, silica, attapulgite clay, kieselguhr, chalk, diatomaxeous earth, lime, calcium carbonate, bentonite clay, fuller's earth, fertiliser, cotton seed hulls, wheat flour, soybean flour, pumice, wood flour, walnut shell flour, lignin and the like.

A broad range of surface-active agents are advantageously employed in both said liquid and solid compositions, especially those designed to be diluted with carrier before application. The surface-active agents can be anionic, cationic, non-ionic or polymeric in character and can be employed as emulsifying agents, wetting agents, suspending agents or for other purposes. Typical surface active agents include salts of alkyl sulfates, such as diethanolammonium lauryl sulphate; alkylarylsulfonate salts, such as calcium dodecylbenzenesulfonate; alkylphenol-alkylene oxide addition products, such as nonylphenol-C.sub. 18 ethoxylate; alcohol-alkylene oxide addition products, such as tridecyl alcohol-C.sub. 16 ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly utilized in agricultural compositions include crystallisation inhibitors, viscosity modifiers, suspending agents, spray droplet modifiers, pigments, antioxidants, foaming agents, light-blocking agents, compatibilizing agents, antifoam agents, sequestering agents, neutralising agents and buffers, corrosion inhibitors, dyes, odorants, spreading agents, penetration aids, micronutrients, emollients, lubricants, sticking agents, and the like. The compositions can also be formulated with liquid fertilizers or solid, particulate fertiliser carriers such as ammonium nitrate, urea and the like.

An important factor in influencing the usefulness of a given herbicide is its selectivity towards crops. In some cases, a beneficial crop is susceptible to the effects of the herbicide. To be effective, an herbicide must cause minimal damage (preferably no damage) to the beneficial crop while maximizing damage to weed species which infest the locus of the crop. To preserve the beneficial aspects of herbicide use and to minimize crop damage, it is known to apply herbicides in combination with an antidote if necessary. As used here in 'antidote' describes a compound which has the effect of establishing herbicide selectivity, i.e. continued herbicidal phytotoxicity to weed species by the herbicide and reduced or non-phytotoxicity to the cultivated crop species. The term 'antidotally effective amount' describes an amount of an antidote compound which counteracts to some degree a phytotoxic response of a beneficial crop to an herbicide. If necessary or desired for a particular application or crop, the composition of the present invention may contain an antidotally effective amount of an antidote for the herbicides of the invention. Those skilled in the art will be familiar with antidotes which are suitable for use with mesotrione and pendimethalin and can readily determine an antidotally effective amount for a particular compound and application. The antidote may include, for example, benoxacor, fenclorim, cloquintocet-mexyl, mefenpyr-diethyl, furilazole, dicyclonon, fluxofenim, dichlormid, flurazole, isoxadifen-ethyl, fenchlorazole-ethyl, primisulfuron-methyl, cyprosulfamide, the compound of formula II 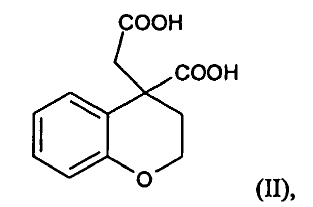 the compound of formula III 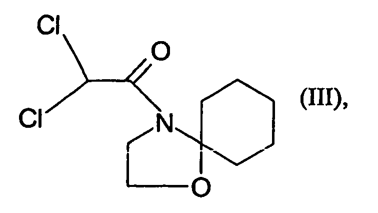 the compound of formula IV 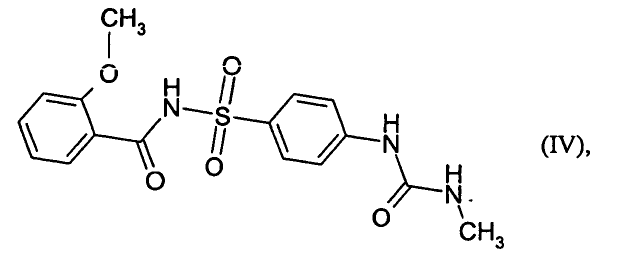 the compound of formula V 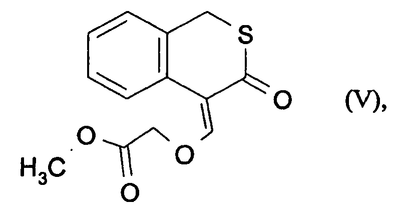 the compound of formula VI 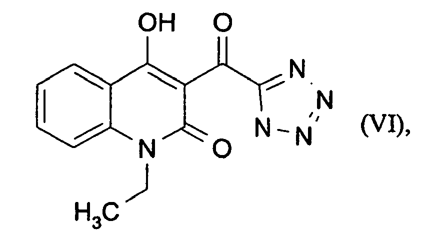 or the compound of formula VII

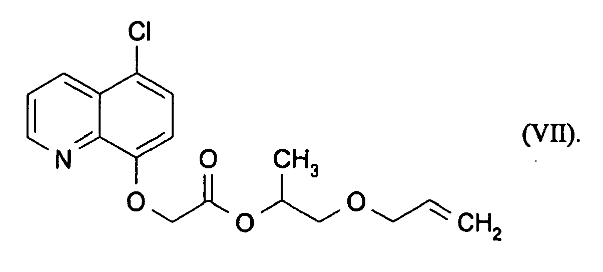

In addition, further, other biocidally active ingredients or compositions may be combined with the herbicidal composition of this invention. For example, the compositions may contain, in addition to mesotrione and pendimethalin, other herbicides, insecticides, fungicides, bactericides, acaracides, nematicides and/or plant growth regulators, in order to broaden the spectrum of activity.

Each of the above formulations can be prepared as a package containing the herbicides together with other ingredients of the formulation (diluents, emulsifiers, surfactants, etc.). The formulations can also be prepared by a tank mix method, in which the ingredients are obtained separately and combined at the grower site.

These formulations can be applied to the areas where control is desired by conventional methods. Dust and liquid compositions, for example, can be applied by the use of power-dusters, broom and hand sprayers and spray dusters. The formulations can also be applied from airplanes as a dust or a spray or by rope wick applications. To modify or control growth of germinating seeds or emerging seedlings, dust and liquid formulations can be distributed in the soil to a depth of at least one-half inch below the soil surface or applied to the soil surface only, by spraying or sprinkling. The formulations can also be applied by addition to irrigation water. This permits penetration of the formulations into the soil together with the irrigation water. Dust compositions, granular compositions or liquid formulations applied to the surface of the soil can be distributed below the surface of the soil by conventional means such as discing, dragging or mixing operations.

The present invention can be used in any situation in which weed control is desired, for example in agriculture, on golf courses, or in gardens. The present invention is particularly suitable for the selective control of weeds such as goosegrass and white clover in turfgrass. Mixtures of mesotrione and pendimethalin coated on or impregnated in a fertiliser granule are particularly useful.

The following examples are for illustrative purposes only. The examples are not intended as necessarily representative of the overall testing performed and are not intended to limit the invention in any way. As one skilled in the art is aware, in herbicidal testing, a significant number of factors that are not readily controllable can affect the results of individual tests and render them non-reproducible. For example, the results may vary depending on environmental factors, such as amount of sunlight and water, soil type, pH of the soil, temperature and humidity, among others. Also, the depth of planting, the application rate of individual and combined herbicides, the application rate of any antidote, and the ratio of the individual herbicides to one another and/or to an antidote as well as the nature of crops or weeds being tested can affect the results of the test. Results may vary from crop to crop within the crop varieties.

### EXAMPLES

In the following tests, herbicides were applied at reduced field rates because herbicide effects are magnified in a glasshouse environment. The rates tested were selected to give between about 50 and 70% control with herbicides applied alone, so that any synergistic effect could be readily detected when testing mixtures.

### Example 1 - Control of goosegrass with mesotrione and pendimethalin applied pre-emergence

A glasshouse trial was carried out. Goosegrass seeds were sown into standard glasshouse potting mix (1:1 v/v Promix:Vero sand soil) contained in 10 cm square plastic pots. Treatments were replicated three times. Mesotrione (in the form Callisto^{®} 480SE) was applied pre-emergence to goosegrass (*Eleusine indica*) at 100g ai/ha with or without pendimethalin (in the form Prowl® H2O). When used, pendimethalin was applied at a rate of 140g ai/ha or 280g ai/ha. The adjuvant system was X-77 at 0.1 % v/v in deionised water. 200 litres of herbicide/adjuvant system was used per hectare. General weed control was evaluated at 7 and 14 days after treatment (DAT). It is noted that all herbicides were applied at reduced field rates because herbicide effects are magnified in a glasshouse environment. Rates were chosen to give a 50 to 70% level of control with herbicides applied alone as this allows for detection of any synergistic effect when tank mixtures are used.

The results are shown in Table 1. The results were evaluated using the Colby formula. The expected result for (A+B) is (A+B) - (AxB/100) where A and B are the 'observed' results for A and B on their own. Control from the tank mixture is synergistic if the actual result is significantly higher than the expected result (significance based on Student-Newman-Keuls multiple range test).

**TABLE 1**

| Herbicide | Rate (g ai/ha) | Plus Mesotrione at 100 g ai/ha | |
|---|---|---|---|
| | | Actual | Expected |
| Pendimethalin | 140 | **35*** | 22 |
| Pendimethalin | 280 | **37*** | 22 |

| | | | |
|---|---|---|---|
| * indicates synergy | | | |

### Example 2 - Control of goosegrass with mesotrione and pendimethalin granules applied pre-emergence

A glasshouse trial was carried out as described in Example 1, except that the herbicides were applied in the form of granules. Mesotrione granules were made by spraying a mesotrione millbase (28% SC formulation) onto a granular carrier, Agsorb LVM-GA 24/48. Pendimethalin granules were made by adding Prowl® 3.3EC (37.4%) and Agsorb LVM-GA 24/48 granules into a tumbler, followed by spraying with a binder, HiSil 233.

For testing mixtures of mesotrione and pendimethalin, the appropriate number of granules for each herbicide were weighed and thoroughly mixed. Granules were weighed for each individual pot using an amount equivalent to the rates listed in Table 2, and, based on a pot surface area of 10 cm², were carefully hand sprinkled on the emerged plants and pot surface. The results are shown in Table 2.

**TABLE 2**

| Herbicide | Rate (g ai/ha) | Plus Mesotrione at 100 g ai/ha | | Plus Mesotrione at 200 g ai/ha | |
|---|---|---|---|---|---|
| | | Actual | Expected | Actual | Expected |
| Pendimethalin | 140 | **67*** | 48 | **95*** | 80 |
| Pendimethalin | 280 | **87*** | 49 | **100*** | 80 |

| | | | | | |
|---|---|---|---|---|---|
| * indicates synergy | | | | | |

### Example 3 - Control of goosegrass and white clover with mesotrione and pendimethalin applied post-emergence

A glasshouse trial was carried out at described in Example 1, except that the herbicidal mixture was applied post-emergence. No synergy was observed against white clover or goosegrass.

### Example 4-Control of goosgrass and white clover with mesotrione and pendimethalin granules applied post-emergence

A glasshouse trial was carried out as described in Example 2, except that white clover (*Trifolium repens*) was tested in addition to goosegrass, and the granules were applied post-emergence. The results for white clover are shown in Table 3.

**TABLE 3**

| Herbicide | Rate (g ai/ha) | Plus Mesotrione at 200 g ai/ha | |
|---|---|---|---|
| | | Actual | Expected |
| Pendimethalin | 1120 | **93*** | 76 |

| | | | |
|---|---|---|---|
| * indicates synergy | | | |

No synergy was observed against goosegrass with mesotrione and pendimethalin granules applied against post-emergence.

The results show that synergy was observed when applying a mixture of mesotrione and pendimethalin to goosegrass or white clover at various rates.

## Claims

1. A method for controlling or modifying the growth of goosegrass, comprising applying to the locus of the goosegrass, pre-emergence, a composition comprising a herbicidally effective amount of a mixture of mesotrione and pendimethalin.

2. The method of claim 1, wherein the goosegrass is present in turfgrass.

3. A method for controlling or modifying the growth of white clover, comprising applying to the locus of the white clover, post-emergence, a composition comprising a herbicidally effective amount of a mixture of mesotrione and pendimethalin granules.

4. The method of claim 3, wherein the white clover is present in turfgrass.

5. The method of any one of claims 1 to 4, wherein mesotrione comprises a metal chelate of mesotrione.

6. The method of any one of claims 1 to 4, wherein the metal chelate of mesotrione comprises the copper chelate of mesotrione.

7. The method of any one of claims 1 to 4, wherein the combined amount of mesotrione and pendimethalin applied to the locus of the weeds is between about 0.005 kg/ha and about 5 kg/ha.

8. The method of claim 7, wherein the combined amount of mesotrione and pendimethalin applied to the locus of the weeds is between about 0.1 kg/ha and about 3 kg/ha.

9. The method of claim 8, wherein the combined amount of mesotrione and pendimethalin applied to the locus of the weeds is between about 0.2 kg/ha and about 1 kg/ha.

10. The method of any one of claims 1 to 4, wherein the mixture is impregnated in, absorbed onto, or coated on a fertiliser granule.

11. A herbicidal composition comprising a herbicidally effective amount of a mixture of the copper chelate of mesotrione and pendimethalin.

12. The composition of claim 11, wherein the mixture ratio of mesotrione to pendimethalin is from about 1:100 to about 100:1 by weight.

13. The composition of claim 12, wherein the mixture ratio of mesotrione to pendimethalin is from about 1:50 to about 10:1 by weight.

14. The composition of claim 13, wherein the mixture ratio of mesotrione to pendimethalin is from about 1:10 to about 2:1 by weight.

15. The composition of any one of claims 11 to 14, wherein the mixture is impregnated in, absorbed onto, or coated on a fertiliser granule.

## Patentansprüche

1. Verfahren zur Bekämpfung oder Modifizierung des Wachstums von Klettenlabkraut umfassend das Ausbringen einer Zusammensetzung umfassend eine herbizid wirksame Menge einer Mischung von Mesotrion und Pendimethalin auf den Standort von Klettenlabkraut vor Auflauf.

2. Verfahren gemäss Anspruch 1, wobei das Klettenlabkraut im Rasen vorhanden ist.

3. Verfahren zur Bekämpfung oder Modifizierung des Wachstums von Weissklee umfassend das ausbringen einer Zusammensetzung umfassend eine herbizid wirksame Menge einer Mischung von Mesotrion und Pendimethalin-Körnchen auf den Standort von Weissklee nach Auflauf.

4. Verfahren gemäss Anspruch 1, wobei der Weissklee im Rasen vorhanden ist.

5. Verfahren gemäss einem der Ansprüche 1 bis 4, wobei das Mesotrion ein Metallchelat von Mesotrion umfasst.

6. Verfahren gemäss einem der Ansprüche 1 bis 4, wobei das Metallchelat von Mesotrion das Kupferchelat von Mesotrione umfasst.

7. Verfahren gemäss einem der Ansprüche 1 bis 4, wobei die Gesamtmenge an Mesotrion und Pendimethalin, die auf den Standort der Unkräuter ausgebracht wird, zwischen etwa 0,005 und etwa 5 kg/ha beträgt.

8. Verfahren gemäss Anspruch 7, wobei die Gesamtmenge an Mesotrion und Pendimethalin, die auf den Standort der Unkräuter ausgebracht wird, zwischen etwa 0,1 und etwa 3 kg/ha beträgt.

9. Verfahren gemäss Anspruch 8, wobei die Gesamtmenge an Mesotrion und Pendimethalin, die auf den Standort der Unkräuter ausgebracht wird, zwischen etwa 0,2 und etwa 1 kg/ha beträgt.

10. Verfahren gemäss einem der Ansprüche 1 bis 4, wobei die Mischung in Düngemittelgranulat imprägniert, darauf absorbiert oder darauf beschichten ist.

11. Herbizidzusammensetzung, umfassend eine herbizid wirksame Menge einer Mischung von Mesotrion-Kupferchelat und Pendimethalin.

12. Zusammensetzung gemäss Anspruch 11, wobei das Mischungsverhältnis von Mesotrion zu Pendimethalin von etwa 1:100 bis etwa 100:1 (Gewicht) beträgt.

13. Zusammensetzung gemäss Anspruch 12, wobei das Mischungsverhältnis von Mesotrion zu Pendimethalin von etwa 1:50 bis etwa 10:1 (Gewicht) betragt.

14. Zusammensetzung gemäss Anspruch 13, wobei das Mischungsverhältnis von, Mesotrion zu Pendimethalin von etwa 1:10 bis etwa 2:1 (Gewicht) beträgt.

15. Verfahren gemäss einem der Ansprüche 11 bis 14, wobei die Mischung in Düngemittelgranulat imprägniert darauf absorbiert oder darauf beschichtet ist.

## Revendications

1. Procédé pour maîtriser ou modifier la croissance de cousine indienne, comprenant l'application au site de l'éleusine indienne, en prélevée, d'une composition comprenant une quantité efficace du point de vue herbicide d'un mélange de mésotrione et de pendiméthaline.

2. Procédé selon la revendication 1, où l'éleusine indienne est présente dans du gazon.

3. Procédé pour maîtriser ou modifier la croissance du trèfle blanc, comprenant l'application au site du trèfle blanc, en post-levée, d'une composition comprenant une quantité efficace du point de vue herbicide d'un mélange de granulés de mésotrione et de pendiméthaline,

4. Procédé selon la revendication 3, où le trèfle blanc est présent dans du gazon.

5. Procédé selon l'une quelconque des revendications 1 à 4, où la mésotrione comprend un chélate de métal de mésotrione.

6. Procédé selon l'une quelconque des revendications 1 à 4, où le chélate de métal de mésotrione comprend le chélate de cuivre de mésotrione.

7. Procédé selon l'une quelconque des revendications 1 à 4, où la quantité combinée de mésotrione et de pendiméthaline appliquée au site des mauvaises herbes est entre environ 0,005 kg/ha et environ 5 kg/ha.

8. Procédé selon la revendication 7, où la quantité combinée de mésotrione et de pendiméthaline appliquée au site des mauvaises herbes est entre environ 0,1 kg/ha et environ 3 kg/ha.

9. Procédé selon la revendication 8, où la quantité combinée, de mésotrione et de pendiméthaline appliquée au site des mauvaises herbes est entre environ 0,2 kg/ha et environ 1 kg/ha.

10. Procédé selon l'une quelconque des revendications 1 à 4 où le mésange imprègne, est absorbé sur ou recouvre un granulé d'engrais.

11. Composition herbicide comprenant une quantité efficace du point de vue herbicide d'un mélange du chélate de cuivre de mésotrione et de pendiméthaline.

12. Composition selon la revendication 11, où le rapport de mélange de la mésotrione, à la pendiméthaline est d'environ 1 : 100 à environ 100 : 1, en poids.

13. Composition selon la revendication 12, où le rapport de mélange de la mésotrione à la pendiméthaline est d'environ 1 : 50 à environ 10 : 1 en poids.

14. Composition selon la revendication 13, où le rapport de mélange de la mésotrione à la pendiméthaline est d'environ 1 : 10 à environ 2 : 1 en poids.

15. Composition selon l'une quelconque des revendications 11 à 14, où le mélange imprègne, est absorbé sur ou recouvre un granulé d'engrais.
